# EUROPEAN PATENT APPLICATION

(11) **EP 4 811 025 A1**
(43) Date of publication of application: **23.09.2026**
(21) Application number: 24890384.1
(22) Date of filing: 11.10.2024
(51) Int. Cl.: G02F 1/1335

(54) **DISPLAY MODULE, DISPLAY APPARATUS AND ELECTRONIC DEVICE**

(30) Priority: 17.11.2023 CN 202311541666
(71) Applicant: Huizhou TCL Mobile Communication Co., Ltd, Guangdong 516006 (CN)
(72) Inventor: LUO, Guangyue, Huizhou, Guangdong 516006 (CN); YE, Yun, Huizhou, Guangdong 516006 (CN); ZHAO, Yunguo, Huizhou, Guangdong 516006 (CN)
(74) Representative: Herrero & Asociados, S.L.
(86) International application number: PCT/CN2024/124119
(87) International publication number: WO 2025/103026

(57) **Abstract**

A display module (100), a display apparatus (10) and an electronic device (1). The display module (100) comprises a plurality of sub-pixels (110), wherein at least one sub-pixel (110) comprises a color filter sub-pixel (112) and a transparent sub-pixel (114); and the display module (100) has a first display mode, in which the color filter sub-pixel (112) and the transparent sub-pixel (114) are both turned on to transmit light. By means of controlling, in the first display mode, a light source to pass through both the color filter sub-pixel (112) and the transparent sub-pixel (114), the display effect of a natural full spectrum can be simulated.

## Description

This application claims priority to Chinese Patent Applications No. 202311541666.3, filed on November 17, 2023 and entitled "DISPLAY MODULE, DISPLAY APPARATUS AND ELECTRONIC DEVICE". The entire disclosures of the above application are incorporated herein by reference.

### TECHNICAL FIELD

The present application belongs to the technical field of display devices, and particularly relates to a display module, a display apparatus, and an electronic device.

### BACKGROUND TECHNOLOGY

With the advancement of technology and the increasing demand for eye protection in display devices, various manufacturers have invested significant resources in research related to eye protection for display devices. Among these, numerous academic studies have been conducted on the impact of artificial light sources on biological characteristics, and the results indicate that artificial light sources have a significant interference effect on human circadian rhythms. For example, enhanced stimulation by blue light can suppress the production of melatonin, thereby inhibiting sleepiness.

Consumers generally consider natural light to be the healthiest and most eye-friendly light source. Therefore, there is an urgent need to design a display device capable of simulating a natural light spectrum to meet the increasingly growing demand for eye protection.

### Technical Problem

Embodiments of the present application provide a display module, a display apparatus, and an electronic device, so as to solve the problem that existing display screens are difficult to achieve a display effect of a natural light spectrum.

### SUMMARY OF INVENTION

In a first aspect, an embodiment of the present application provides a display module, comprising:
A plurality of sub-pixels, wherein at least one of the sub-pixels comprises a color filter sub-pixel and a transparent sub-pixel; wherein the display module has a first display mode, and in the first display mode, the color filter sub-pixel and the transparent sub-pixel are both turned on to transmit light.

Optionally, a ratio of an area of the transparent sub-pixel to an area of the color filter sub-pixel ranges from 0.1 to 10.

Optionally, the display module has a second display mode, and in the second display mode, the color filter sub-pixel is turned on to transmit light, and the transparent sub-pixel is turned off.

Optionally, the display module is configured to dynamically switch between the first display mode and the second display mode.

Optionally, the display module further comprises:
A driving layer disposed on one side of the plurality of sub-pixels, wherein the driving layer comprises a first switch and a second switch, the first switch is configured corresponding to the color filter sub-pixel to turn on or turn off the color filter sub-pixel, and the second switch is configured corresponding to the transparent sub-pixel to turn on or turn off the transparent sub-pixel.

Optionally, the first switch and the second switch are both thin-film transistors.

Optionally, a drain of the first switch is connected to a source of the second switch.

Optionally, a pixel electrode of the color filter sub-pixel is integrally formed with the drain of the first switch and the source of the second switch.

Optionally, each of the sub-pixels in at least one row of sub-pixels comprises the color filter sub-pixel and the transparent sub-pixel.

The driving layer further comprises at least one switching line, and each of the switching lines is respectively connected to the second switch corresponding to the transparent sub-pixels in the row of sub-pixels.

Optionally, a pixel electrode of the transparent sub-pixel is integrally formed with a drain of the second switch.

In a second aspect, an embodiment of the present application further provides a display apparatus, comprising:
The display module according to any one of the foregoing items.

A backlight module disposed on one side of the display module, wherein the backlight module is configured to provide a backlight source for the display module.

Optionally, the backlight module comprises a lamp bead, the lamp bead comprises a blue light chip and a fluorescent adhesive disposed on the blue light chip, a peak wavelength of a spectrum emitted by the blue light chip ranges from 440 nm to 450 nm, and the fluorescent adhesive, when excited by the light emitted from the blue light chip, enables a color temperature range of light emitted by the lamp bead to be 2600 K to 6500 K.

Optionally, the fluorescent adhesive comprises a first fluorescent material, and the first fluorescent material emits light having a peak wavelength of 485 nm to 500 nm when excited by the light emitted from the blue light chip.

Optionally, the first fluorescent material is an oxynitride and silicate mixture BaSi₂O₂N₂:Eu:.

Optionally, the fluorescent adhesive comprises a second fluorescent material, and the second fluorescent material emits light having a peak wavelength of 525 nm to 535 nm when excited by the light emitted from the blue light chip.

Optionally, the second fluorescent material is a mixture of green phosphor and YAG phosphor, and the green phosphor is Ga-YAG:.

Optionally, the fluorescent adhesive comprises a third fluorescent material, and the third fluorescent material emits light having a peak wavelength of 650 nm to 665 nm when excited by the light emitted from the blue light chip.

Optionally, the third fluorescent material is a nitride M₂ₓSi₅N₈:Euₓ²⁺ or a nitride CaAlSiN₃:Eu²⁺.

In a third aspect, an embodiment of the present application further provides an electronic device, comprising the display apparatus according to any one of the foregoing items.

Optionally, the electronic device comprises a housing, the display apparatus is at least partially disposed in the housing, and the housing is configured to carry or encapsulate the display apparatus.

### Beneficial Effects

In the display module, the display apparatus, and the electronic device according to the embodiments of the present application, by reconfiguring an existing color filter sub-pixel into a structure comprising a color filter sub-pixel and a transparent sub-pixel, a light source can be controlled, in a first display mode, to simultaneously pass through the color filter sub-pixel and the transparent sub-pixel, thereby reducing extreme effects of overall display colors and achieving a display effect simulating a natural full spectrum, so as to meet users' eye-protection requirements for display devices.

### BRIEF DESCRIPTION OF THE DRAWINGS

In order to more clearly illustrate the technical solutions in the embodiments of the present application, the drawings required for describing the embodiments will be briefly introduced below. It is apparent that the drawings described below are merely some embodiments of the present application, and for those skilled in the art, other drawings can also be obtained based on these drawings without creative effort.
FIG. 1 is a schematic structural diagram of an electronic device provided in an embodiment of the present application.
FIG. 2 is a schematic structural diagram of a display apparatus provided in an embodiment of the present application.
FIG. 3 is a partial schematic structural diagram of a display module provided in an embodiment of the present application.
FIG. 4 is a schematic cross-sectional structural diagram taken along line A-A of the display module shown in FIG. 3.
FIG. 5 is a schematic structural diagram of a first configuration of a backlight module provided in an embodiment of the present application.
FIG. 6 is a schematic structural diagram of a second configuration of a backlight module provided in an embodiment of the present application.
FIG. 7 is a schematic diagram of spectral distributions under different display modes provided in an embodiment of the present application.

### DETAILED DESCRIPTION OF THE PREFERRED EMBODIMENTS

The technical solutions in the embodiments of the present application will be clearly and completely described below with reference to the accompanying drawings in the embodiments of the present application. Apparently, the described embodiments are only some embodiments of the present application, rather than all embodiments. Based on the embodiments of the present application, all other embodiments obtained by those skilled in the art without creative effort shall fall within the protection scope of the present application.

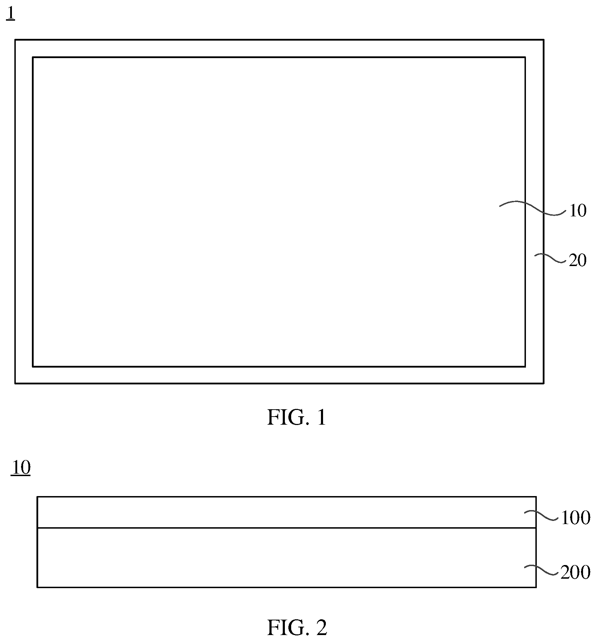

Referring to FIG. 1, FIG. 1 is a schematic structural diagram of an electronic device provided in an embodiment of the present application. An embodiment of the present application provides an electronic device 1, and the electronic device 1 may be a device having a display function, such as a television, a mobile phone, a computer, an augmented reality device (Augmented Reality, AR), a virtual reality device (Virtual Reality, VR), or the like.

Specifically, by way of example, the electronic device 1 may include a display apparatus 10 and a housing 20.

The display apparatus 10 is a main component of the electronic device 1. Taking a liquid crystal type display apparatus as an example, with reference to FIG. 1 and FIG. 2, FIG. 2 is a schematic structural diagram of a display apparatus provided in an embodiment of the present application. The display apparatus 10 may include a display module 100 and a backlight module 200. The display module 100 has a structure including an array substrate, a color filter substrate, and a liquid crystal layer disposed between the array substrate and the color filter substrate. The backlight module 200 provides a backlight source for the display module 100, and the backlight module 200 cooperates with the display module 100 to realize image display. The display principle of the display apparatus 10 is as follows: under the action of an electric field, the arrangement direction of liquid crystal molecules changes, so that the transmittance (modulation) of the backlight source is changed to complete electrical-to-optical conversion; and then, through different excitations of R, G, and B three primary color signals, and by means of red, green, and blue color filter films, time-domain and spatial-domain color reproduction is achieved.

The housing 20 is configured to carry the display apparatus 10 and encapsulate components such as wiring of the display apparatus 10, so as to improve the appearance of the electronic device 1.

With the advancement of technology and the increasing demand for eye protection in display devices, various manufacturers have invested significant resources in research related to eye protection for display devices. Among these, numerous academic studies have been conducted on the impact of artificial light sources on biological characteristics, and the results indicate that artificial light sources have a significant interference effect on human circadian rhythms. For example, enhanced stimulation by blue light can suppress the production of melatonin, thereby inhibiting sleepiness.

Consumers generally consider natural light to be the healthiest and most eye-friendly light source. Therefore, there is an urgent need to design a display device capable of simulating a natural light spectrum to meet the increasingly growing demand for eye protection.

In order to reduce the occurrence of the above problems, in the embodiments of the present application, both the display module 100 and the backlight module 200 are improved, which will be described below with reference to the accompanying drawings.

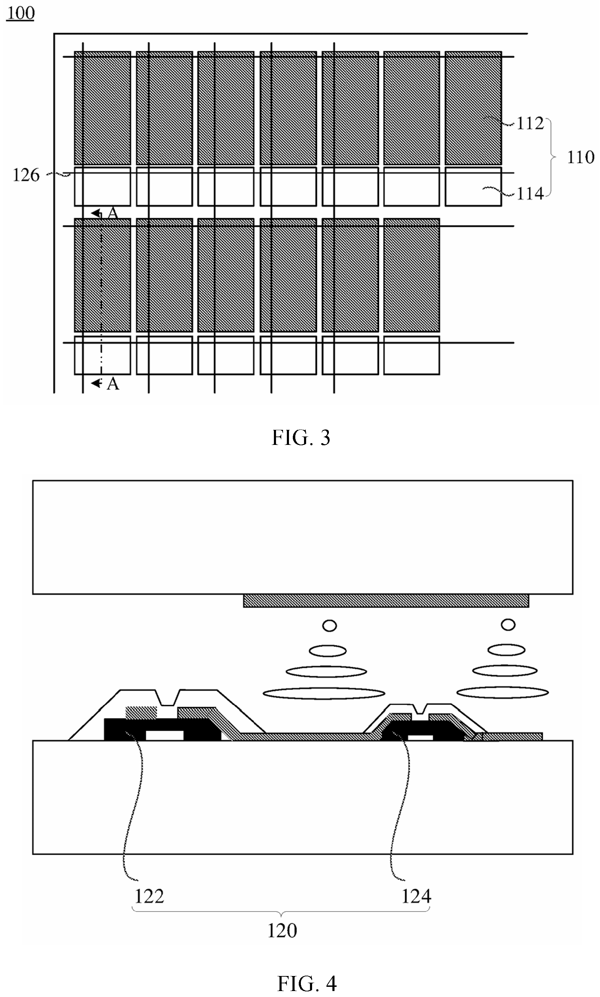

Exemplarily, with reference to FIG. 1 and FIG. 2 and further referring to FIG. 3, FIG. 3 is a partial schematic structural diagram of a display module provided in an embodiment of the present application. The display module 100 includes a plurality of sub-pixels 110. It can be understood that the plurality of sub-pixels 110 may have a structure including a color filter, liquid crystal molecules, and a pixel electrode. The pixel electrode cooperates with a common electrode to act on the liquid crystal molecules, so as to change the orientation of the liquid crystal molecules, thereby turning on or turning off the sub-pixels 110.

At least one sub-pixel 110 includes a color filter sub-pixel 112 and a transparent sub-pixel 114. The color filter sub-pixel 112 may be one of a red sub-pixel, a blue sub-pixel, or a green sub-pixel, and the plurality of sub-pixels 110 may include these three types of sub-pixels, namely red, blue, and green sub-pixels. The transparent sub-pixel 114 is a sub-pixel without a color filter and allows light to pass through directly. The function of the transparent sub-pixel 114 is to transmit various spectral components of full-spectrum backlight, thereby achieving full-spectrum display.

The display module 100 has a first display mode. In the first display mode, the color filter sub-pixel 112 and the transparent sub-pixel 114 are both turned on to transmit light. The first display mode may also be referred to as a full-spectrum display mode. In this display mode, the backlight source is not limited to passing only through the color filter sub-pixel 112, which would result in relatively high color purity; instead, the backlight source can pass through both the color filter sub-pixel 112 and the transparent sub-pixel 114 simultaneously, so that the overall color display is less extreme. That is, light from the backlight source is mixed in different ways to achieve a full-spectrum eye-protection display, simulate natural light display, and reduce stimulation to a user's eyes.

It should be noted that a sub-pixel being turned on may be understood as a state in which, under the action of a driving circuit, liquid crystal molecules are deflected by a certain angle, thereby allowing light to pass through; this state is referred to as the sub-pixel being turned on. Correspondingly, when the liquid crystal molecules are in a closed state such that light cannot pass through, the corresponding sub-pixel is turned off.

In the display module 100 provided in the embodiments of the present application, by reconfiguring an existing color filter sub-pixel into a structure comprising a color filter sub-pixel 112 and a transparent sub-pixel 114, the light source can be controlled, in the first display mode, to simultaneously pass through the color filter sub-pixel 112 and the transparent sub-pixel 114, thereby reducing extreme effects of overall display colors and achieving a display effect simulating a natural full spectrum, so as to meet users' eye-protection requirements for the display apparatus 10.

The ratio of an area of the transparent sub-pixel 114 to an area of the color filter sub-pixel 112 is within a range of 0.1 to 10. That is, the ratio of the area of the transparent sub-pixel 114 to the area of the color filter sub-pixel 112 may be 0.1, meaning that the area of the transparent sub-pixel 114 is relatively small and is 0.1 times the area of the color filter sub-pixel 112; the ratio may also be 1, meaning that the area of the transparent sub-pixel 114 is equal to the area of the color filter sub-pixel 112; and the ratio may further be 10, meaning that the area of the transparent sub-pixel 114 is larger than the area of the color filter sub-pixel 112.

It should be noted that, since high color gamut display and simulated natural spectrum display are contradictory requirements, the ratio of the area of the transparent sub-pixel 114 to the area of the color filter sub-pixel 112 is set within a relatively broad range. The ratio may be designed according to usage scenarios of the electronic device 1. For example, for electronic devices 1 used indoors, frequently used at night, or frequently displaying textual information, the ratio may be greater than 1, so as to simulate natural light display and achieve eye-protection display. As another example, for electronic devices 1 used outdoors, frequently used during daytime, or frequently displaying image colors, the ratio may be less than or equal to 1. Since ambient light is relatively strong, the electronic device 1 has higher requirements for color saturation to match the ambient light; on one hand, this enables the user to clearly view the display, and on the other hand, it can also achieve an eye-protection effect.

It should be noted that, for the plurality of sub-pixels 110, at least one sub-pixel 110 includes a color filter sub-pixel 112 and a transparent sub-pixel 114. The number of sub-pixels 110 that include both the color filter sub-pixel 112 and the transparent sub-pixel 114 may be determined according to the scenario in which the electronic device 1 is used, or the scenarios in which the electronic device 1 is frequently used. For example, for an electronic device 1 used indoors, frequently used at night, or frequently displaying textual information, all of the plurality of sub-pixels 110 may be configured to include both the color filter sub-pixel 112 and the transparent sub-pixel 114, and the ratio of the area of the transparent sub-pixel 114 to the area of the color filter sub-pixel 112 may be greater than 1, so as to simulate natural light display and achieve an eye-protection display.

As another example, for an electronic device 1 used outdoors, frequently used during daytime, or frequently displaying image colors, all of the plurality of sub-pixels 110 may also be configured to include both the color filter sub-pixel 112 and the transparent sub-pixel 114. In this case, the ratio of the area of the transparent sub-pixel 114 to the area of the color filter sub-pixel 112 is not limited. Alternatively, a small portion of the plurality of sub-pixels 110 may be configured to include both the color filter sub-pixel 112 and the transparent sub-pixel 114, while the remaining sub-pixels 110 are all of a color filter sub-pixel type. In this case, the ratio of the area of the transparent sub-pixel 114 to the area of the color filter sub-pixel 112 is also not limited. Since ambient light is relatively strong, the electronic device 1 has higher requirements for color saturation. By setting the overall proportion of the color filter sub-pixels 112 to be higher than that of the transparent sub-pixels 114, adaptation to ambient light can be achieved; on one hand, this enables users to clearly view the display, and on the other hand, it can also achieve an eye-protection effect.

In the embodiments of the present application, description is provided by taking, as an example, a case in which each of the plurality of sub-pixels 110 includes both the color filter sub-pixel 112 and the transparent sub-pixel 114. In the above first display mode, the color filter sub-pixels 112 and the transparent sub-pixels 114 in all the sub-pixels 110 are both turned on to transmit light, so that light can be mixed, thereby reducing the high-saturation display of the electronic device 1 and simulating natural light display, so as to achieve an eye-protection display.

Exemplarily, the display module 100 further has a second display mode. In the second display mode, the color filter sub-pixels 112 in all the sub-pixels 110 are turned on to transmit light, and the transparent sub-pixels 114 are turned off, so that the color display is relatively pure and a display effect with a higher color gamut or higher saturation can be obtained. Therefore, the second display mode may also be referred to as a high color gamut display mode.

The display module 100 or the electronic device 1 may adopt different display modes under different usage scenarios. When the display module 100 changes its usage scenario, or when ambient light changes significantly within the same usage scenario, the display module 100 may dynamically switch between the first display mode and the second display mode, thereby achieving a dynamically switchable function between high color gamut display and full-spectrum display in terms of display effects. This can broaden application scenarios of the electronic device 1 and improve competitiveness of the electronic device 1.

The switching of display modes may be implemented based on other components of the display module 100.

Exemplarily, with reference to FIG. 1 to FIG. 3 and further referring to FIG. 4, FIG. 4 is a schematic cross-sectional structural diagram taken along line A-A of the display module shown in FIG. 3. The display module 100 further includes a driving layer 120, and the driving layer 120 is disposed on one side of the plurality of sub-pixels 110. It can be understood that the driving layer 120 may be disposed on one side of the array substrate. The driving layer 120 applies voltages to the pixel electrodes and the common electrode, thereby controlling the orientation of liquid crystal molecules to turn on or turn off the sub-pixels 110.

The driving layer 120 includes a first switch 122 and a second switch 124. The first switch 122 is configured corresponding to the color filter sub-pixel 112 to turn on or turn off the color filter sub-pixel 112. That is, the first switch 122 applies a voltage to the pixel electrode, and the pixel electrode cooperates with the common electrode to act on the liquid crystal molecules to change their orientation, thereby allowing light to pass through the color filter sub-pixel 112 or preventing light from passing through the color filter sub-pixel 112, so as to achieve turning on or turning off of the color filter sub-pixel 112.

Correspondingly, the second switch 124 is configured corresponding to the transparent sub-pixel 114 to turn on or turn off the transparent sub-pixel 114. That is, the second switch 124 applies a voltage to the pixel electrode, and the pixel electrode cooperates with the common electrode to act on the liquid crystal molecules to change their orientation, thereby allowing light to pass through the transparent sub-pixel 114 or preventing light from passing through the transparent sub-pixel 114, so as to achieve turning on or turning off of the transparent sub-pixel 114.

Exemplarily, both the first switch 122 and the second switch 124 are thin-film transistors. A thin-film transistor is a semiconductor switching device. By configuring a semiconductor switching device for each color filter sub-pixel 112 and each transparent sub-pixel 114, each color filter sub-pixel 112 and each transparent sub-pixel 114 can be directly controlled by point pulses, such that each node is independent and can be continuously controlled, thereby improving the response speed of the display module 100 and enabling precise control of display gray levels.

The drain of the first switch 122 is connected to the source of the second switch 124. It should be noted that the drain of the first switch 122 is typically connected to the pixel electrode. The pixel electrode of the color filter sub-pixel 112 is used as the source of the second switch 124 corresponding to the transparent sub-pixel 114. The pixel electrode of the transparent sub-pixel 114 is similar to that of the color filter sub-pixel 112, thereby enabling formation of a controllable transparent sub-pixel 114 region. During fabrication, the pixel electrode of the color filter sub-pixel 112 is integrally formed with the drain of the first switch 122 and the source of the second switch 124, that is, they are fabricated together, which can simplify the fabrication process and improve manufacturing efficiency. Similarly, the pixel electrode of the transparent sub-pixel 114 is connected to the drain of the second switch 124, and during fabrication, the pixel electrode of the transparent sub-pixel 114 and the drain of the second switch 124 may also be integrally formed.

At least one row of sub-pixels 110 is configured such that each sub-pixel 110 in the row includes both the color filter sub-pixel 112 and the transparent sub-pixel 114. The driving layer 120 further includes at least one switching line 126, and each switching line 126 is respectively connected to the second switch 124 corresponding to the transparent sub-pixels 114 in one row of sub-pixels 110, so as to achieve on/off control of one row of transparent sub-pixels 114.

For example, in the embodiments of the present application, each of all the sub-pixels 110 includes both the color filter sub-pixel 112 and the transparent sub-pixel 114. Accordingly, the driving layer 120 includes a plurality of switching lines 126, and each switching line 126 is respectively connected to one row of second switches 124. Control of the transparent sub-pixels 114 may be performed on a single-row basis, on a multi-row basis, or by a full-screen unified on/off control. The number of corresponding control circuits varies accordingly, thereby enabling dynamic switching between the first display mode and the second display mode, so that the display module 100 can adapt to different usage scenarios.

In the display module 100 provided in the embodiments of the present application, by reconfiguring an existing color filter sub-pixel into a structure comprising a color filter sub-pixel 112 and a transparent sub-pixel 114, the light source can be controlled, in the first display mode, to simultaneously pass through the color filter sub-pixel 112 and the transparent sub-pixel 114, thereby reducing extreme effects of overall display colors and achieving a display effect simulating a natural full spectrum, so as to meet users' eye-protection requirements for the display apparatus 10.

Correspondingly, the backlight module 200 is also improved.

In conventional backlight, an LED (Light-Emitting Diode) light source is a point light source with a narrow spectrum, and its peak wavelength is between 450 nm and 460 nm. Meanwhile, the white light spectrum formed after exciting phosphor also has significant spectral deficiencies and differs greatly from the solar spectrum. The optimal visual requirement of the human eye is within a color temperature range of 2500 K to 6500 K. The special structure of the human eye and the long-term living environment of humans determine that the human eye has the highest perception when reading and observing under sunlight. In order to make the human eye feel comfortable under a certain illumination environment, the emitted spectrum needs to be close to the solar spectrum, that is, a spectrum with a color rendering index close to 100.

Therefore, in order to cooperate with the display module 100 for simulating full-spectrum display, corresponding improvements are also made to the light source of the backlight module 200.

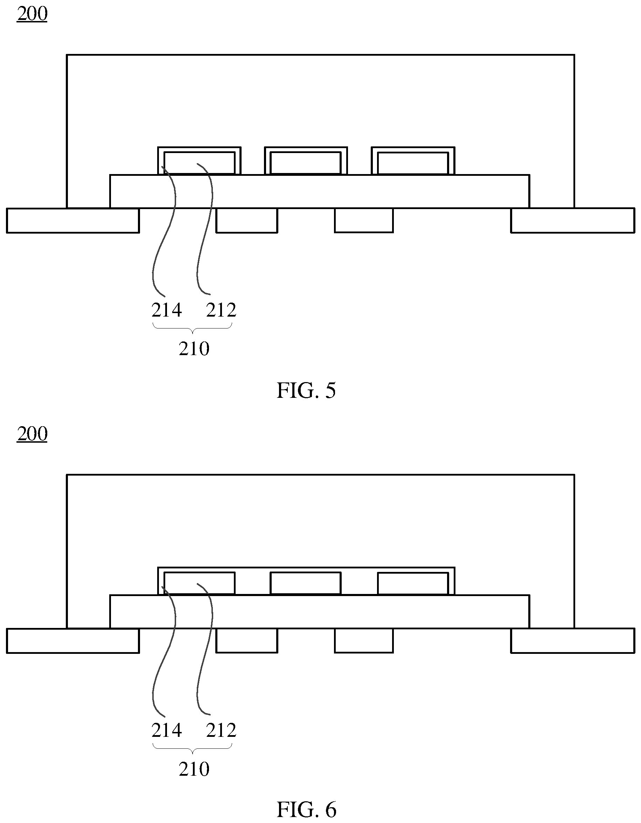

With reference to FIG. 1 to FIG. 4 and further referring to FIG. 5 and FIG. 6, FIG. 5 is a schematic structural diagram of a first configuration of a backlight module provided in an embodiment of the present application, and FIG. 6 is a schematic structural diagram of a second configuration of a backlight module provided in an embodiment of the present application. Exemplarily, the backlight module 200 includes a lamp bead 210, and the lamp bead 210 includes a blue light chip 212 and a fluorescent adhesive 214. The peak wavelength of the spectrum emitted by the blue light chip 212 ranges from 440 nm to 450 nm. The fluorescent adhesive 214 is disposed outside the blue light chip 212, for example, surrounding the blue light chip 212. As shown in FIG. 5, the fluorescent adhesive 214 may surround one blue light chip 212; as shown in FIG. 6, the fluorescent adhesive 214 may also surround a plurality of blue light chips 212, which is not specifically limited herein.

The fluorescent adhesive 214 may include a first fluorescent material, a second fluorescent material, a third fluorescent material, and silicone. The first fluorescent material emits light having a peak wavelength of 485 nm to 500 nm when excited by the light emitted from the blue light chip 212, the second fluorescent material emits light having a peak wavelength of 525 nm to 535 nm when excited by the light emitted from the blue light chip 212, and the third fluorescent material emits light having a peak wavelength of 650 nm to 665 nm when excited by the light emitted from the blue light chip 212. The fluorescent adhesive 214, when excited by the light emitted from the blue light chip 212, enables the lamp bead 210 to emit light having a color temperature in a range of 2600 K to 6500 K, thereby satisfying the optimal visual requirements of the human eye and cooperating with the display module 100 to achieve simulated full-spectrum display and an eye-protection effect.

Exemplarily, the first fluorescent material is a mixture of an oxynitride and a silicate. Specifically, the oxynitride and silicate mixture is BaSi₂O₂N₂:Eu:. The light emitted by the first fluorescent material when excited by the light emitted from the blue light chip 212 is cyan.

Exemplarily, the second fluorescent material is a mixture of a green phosphor and a YAG phosphor. Specifically, the green phosphor is Ga-YAG:. The light emitted by the second fluorescent material when excited by the light emitted from the blue light chip 212 is green.

Exemplarily, the third fluorescent material is a nitride. Specifically, the nitride is M₂ₓSi₅N₈:Euₓ²⁺ or CaAlSiN₃:Eu²⁺. The light emitted by the third fluorescent material when excited by the light emitted from the blue light chip 212 is red.

Exemplarily, the blue light chip 212 is a flip chip. The flip chip is a pinless structure generally including circuit units, and is designed to be electrically and mechanically connected to a circuit through a suitable number of solder bumps (covered with conductive adhesive) located on its surface.

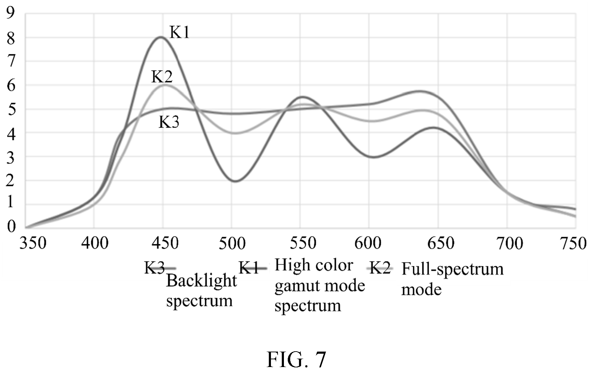

With reference to FIG. 1 to FIG. 6 and further referring to FIG. 7, FIG. 7 is a schematic diagram of spectral distributions under different display modes provided in an embodiment of the present application. In order to verify the display effect of the display apparatus 10 or the electronic device 1 according to the embodiments of the present application, simulation experiments were carried out. In the simulation, the K3 curve represents the spectral distribution of full-spectrum backlight, the K2 curve represents the spectral distribution of white light emitted by the display in the second display mode (i.e., high color gamut display) when the transparent sub-pixel 114 is turned off, and the K1 curve represents the spectral distribution of white light emitted by the display in the first display mode (i.e., full-spectrum display) when the transparent sub-pixel 114 is turned on.

It can be seen that, by adjusting the ratio of the area of the transparent sub-pixel 114 to the area of the color filter sub-pixel 112, the fitting degree between the spectral components of light emitted by the display and the backlight source in the first display mode, as well as the degree of closeness to the natural spectral components, can be adjusted. Thus, by means of an innovative sub-pixel design, a full-spectrum display technology can be realized, that is, an electronic device 1 capable of simulating natural light spectral components can be obtained.

In the display module 100, the display apparatus 10, and the electronic device 1 provided in the embodiments of the present application, by reconfiguring an existing color filter sub-pixel into a structure comprising a color filter sub-pixel 112 and a transparent sub-pixel 114, the light source can be controlled, in the first display mode, to simultaneously pass through the color filter sub-pixel 112 and the transparent sub-pixel 114, thereby reducing extreme effects of overall display colors and achieving a display effect simulating a natural full spectrum, so as to meet users' eye-protection requirements for the display apparatus 10. In addition, by introducing full-spectrum backlight technology to simulate an optimal visual color temperature for the human eye, and cooperating with the display module 100, a simulated natural full-spectrum display can be achieved, thereby achieving an eye-protection purpose.

In the above embodiments, descriptions of the respective embodiments have different emphases. For parts not described in detail in a certain embodiment, reference may be made to relevant descriptions in other embodiments.

In the description of the present application, the terms "first" and "second" are used for descriptive purposes only and should not be construed as indicating or implying relative importance or implicitly indicating the number of the indicated technical features. Therefore, features defined as "first" or "second" may explicitly or implicitly include one or more such features.

The display module, the display apparatus, and the electronic device provided by the embodiments of the present application have been described in detail above. Specific examples are used herein to illustrate the principles and implementations of the present application. The descriptions of the above embodiments are only intended to help understand the method and the core idea of the present application. Meanwhile, for those skilled in the art, based on the idea of the present application, modifications may be made in specific implementations and application scopes. Therefore, the content of this specification should not be construed as limiting the present application.

## Claims

1. A display module, comprising:
a plurality of sub-pixels, wherein at least one of the sub-pixels comprises a color filter sub-pixel and a transparent sub-pixel;
wherein the display module has a first display mode, and in the first display mode, the color filter sub-pixel and the transparent sub-pixel are both turned on to transmit light.

2. The display module according to claim 1, wherein a ratio of an area of the transparent sub-pixel to an area of the color filter sub-pixel ranges from 0.1 to 10.

3. The display module according to claim 2, wherein the display module has a second display mode, and in the second display mode, the color filter sub-pixel is turned on to transmit light, and the transparent sub-pixel is turned off.

4. The display module according to claim 3, wherein the display module is configured to dynamically switch between the first display mode and the second display mode.

5. The display module according to claim 3, further comprising:
a driving layer disposed on one side of the plurality of sub-pixels, wherein the driving layer comprises a first switch and a second switch, the first switch is configured corresponding to the color filter sub-pixel to turn on or turn off the color filter sub-pixel, and the second switch is configured corresponding to the transparent sub-pixel to turn on or turn off the transparent sub-pixel.

6. The display module according to claim 5, wherein the first switch and the second switch are both thin-film transistors.

7. The display module according to claim 6, wherein a drain of the first switch is connected to a source of the second switch.

8. The display module according to claim 7, wherein a pixel electrode of the color filter sub-pixel is integrally formed with the drain of the first switch and the source of the second switch.

9. The display module according to claim 5, wherein each of the sub-pixels in at least one row of sub-pixels comprises the color filter sub-pixel and the transparent sub-pixel;
wherein the driving layer further comprises at least one switching line, and each of the switching lines is respectively connected to the second switch corresponding to the transparent sub-pixels in the row of sub-pixels.

10. The display module according to claim 5, wherein a pixel electrode of the transparent sub-pixel is integrally formed with a drain of the second switch.

11. A display apparatus, comprising:
the display module according to any one of claims 1-10; and
a backlight module disposed on one side of the display module, wherein the backlight module is configured to provide a backlight source for the display module.

12. The display apparatus according to claim 11, wherein the backlight module comprises a lamp bead, the lamp bead comprises a blue light chip and a fluorescent adhesive disposed on the blue light chip, a peak wavelength of a spectrum emitted by the blue light chip ranges from 440 nm to 450 nm, and the fluorescent adhesive, when excited by the light emitted from the blue light chip, enables a color temperature range of light emitted by the lamp bead to be 2600 K to 6500 K.

13. The display apparatus according to claim 12, wherein the fluorescent adhesive comprises a first fluorescent material, and the first fluorescent material emits light having a peak wavelength of 485 nm to 500 nm when excited by the light emitted from the blue light chip.

14. The display apparatus according to claim 13, wherein the first fluorescent material is an oxynitride and silicate mixture BaSi₂O₂N₂:Eu:.

15. The display apparatus according to claim 12, wherein the fluorescent adhesive comprises a second fluorescent material, and the second fluorescent material emits light having a peak wavelength of 525 nm to 535 nm when excited by the light emitted from the blue light chip.

16. The display apparatus according to claim 15, wherein the second fluorescent material is a mixture of green phosphor and YAG phosphor, and the green phosphor is Ga-YAG:.

17. The display apparatus according to claim 12, wherein the fluorescent adhesive comprises a third fluorescent material, and the third fluorescent material emits light having a peak wavelength of 650 nm to 665 nm when excited by the light emitted from the blue light chip.

18. The display apparatus according to claim 17, wherein the third fluorescent material is a nitride M₂ₓSi₅N₈:Euₓ²⁺ or a nitride CaAlSiN₃:Eu²⁺.

19. An electronic device, comprising the display apparatus according to any one of claims 11-18.

20. The electronic device according to claim 19, wherein the electronic device comprises a housing, the display apparatus is at least partially disposed in the housing, and the housing is configured to carry or encapsulate the display apparatus.
